# EUROPÄISCHE PATENTANMELDUNG

(11) **EP 0 693 848 A2**
(43) Veröffentlichungstag der Anmeldung: **24.01.1996**
(21) Anmeldenummer: 95201913.1
(22) Anmeldetag: 12.07.1995
(51) Int. Cl.: H04M 3/54, H04M 3/42

(54) **Kommunikationssystem**

(30) Priorität: 19.07.1994 DE 4425395
(71) Anmelder: Philips Patentverwaltung GmbH, D-22335 Hamburg (DE); Philips Electronics N.V., NL-5621 BA Eindhoven (NL)
(72) Erfinder: Hirth, Peter, Dipl.-Ing., D-22335 Hamburg (DE); Schulz, Hans-Dietmar, D-22335 Hamburg (DE)
(74) Vertreter: Volmer, Georg, Dipl.-Ing.

(57) **Zusammenfassung**

Die Erfindung bezieht sich auf ein Kommunikationssystem mit einem ersten Teilnehmeranschluß (6) für ein erstes Teilnehmerendgerät (7), dem ein in einer Vermittlungsstelle (2) wirkendes Leistungsmerkmal zugeordnet ist, das vom ersten Teilnehmeranschluß (6) aus durch das erste Teilnehmerendgerät (7) aktivierbar und/oder deaktivierbar ist.

Es wird vorgeschlagen, ein Fernsteuern des ersten Teilnehmerendgeräts (7) durch ein zweites Teilnehmerendgerät (10) eines zweiten Teilnehmeranschlusses (9) zur Aktivierung und/oder Deaktivierung des Leistungsmerkmals vorzusehen.

## Beschreibung

Die Erfindung bezieht sich auf ein Kommunikationssystem mit einem ersten Teilnehmeranschluß für ein erstes Teilnehmerendgerät, dem ein in einer Vermittlungsstelle wirkendes Leistungsmerkmal zugeordnet ist, das vom ersten Teilnehmeranschluß aus durch das erste Teilnehmerendgerät aktivierbar und/oder deaktivierbar ist.

In vielen Vermittlungsnetzen, insbesondere dem öffentlichen Fernsprechnetz, ist ein in einer Vermittlungsstelle wirkendes Leistungsmerkmal (d.i. eine Funktion des Vermittlungsnetzes, die über seine Grundfunktionen hinausgeht) wie beispielsweise die Rufumleitung für Teilnehmeranschlüsse nur von einem Teilnehmerendgerät desjenigen Teilnehmeranschlusses aus aktivierbar oder deaktivierbar, dem das Leistungsmerkmal zugeordnet ist. Nach der Aktivierung des Leistungsmerkmals wird die dem Leistungsmerkmal entsprechende Funktion von der zugehörigen Vermittlungsstelle des Vermittlungsnetzes zur Verfügung gestellt. Befindet sich der Inhaber des dem Leistungsmerkmal zugeordneten Teilnehmeranschlusses am Ort eines anderen Teilnehmeranschlusses, so kann er von dort aus das seinem eigenen Teilnehmeranschluß zugeordnete Leistungsmerkmal nicht aktivieren oder deaktivieren. Dies ist insbesondere dann nachteilig, wenn der Inhaber sich vom Ort eines zweiten Teilnehmeranschlusses aus zum Ort eines dritten Teilnehmeranschlusses begibt. Eine Rufumleitung auf den dritten Teilnehmeranschluß vom Ort des zweiten Teilnehmeranschlusses ist dann beispielsweise nicht möglich.

Aus der DE-PS 22 09 617 ist ein Verfahren für ein ferngesteuertes Einstellen, Ändern und Löschen einer Rufumleitung in einem mehrere zentralgesteuerte Anlagen umfassenden Fernsprechnetz bekannt. Dieses Verfahren geht allerdings von einem Fernsprechnetz aus, in dem von einem Teilnehmeranschluß aus auch direkt die Aktivierung einer einem anderen Teilnehmeranschluß zugeordneten Rufumleitung in einer der zentralgesteuerten Anlagen (Vermittlungsstellen) möglich ist.

Der Erfindung liegt die Aufgabe zugrunde, das Kommunikationssystem der eingangs genannten Art zu verbessern.

Die Aufgabe wird dadurch gelöst, daß ein Fernsteuern des ersten Teilnehmerendgeräts durch ein zweites Teilnehmerendgerät eines zweiten Teilnehmeranschlusses zur Aktivierung und/oder Deaktivierung des Leistungsmerkmals vorgesehen ist.

Auf einfache Weise kann so vom Ort des zweiten Teilnehmeranschlusses aus das Aktivieren/Deaktivieren des auf den ersten Teilnehmeranschluß bezogenen Leistungsmerkmals bewirkt werden. Es sind nur mit wenig Aufwand zu realisierende Erweiterungen der Teilnehmerendgeräte erforderlich. Eine Modifikation der Vermittlungsstelle, in der das Leistungsmerkmal wirkt, muß nicht erfolgen.

In einer anderen Ausgestaltung der Erfindung ist eine Übertragung von Signalisierungsinformation über das Vermittlungsnetz von einer Schaltungseinheit des zweiten Teilnehmerendgeräts an eine Schaltungseinheit des ersten Teilnehmerendgeräts vorgesehen, um eine Übertragung von Signalisierungsinformation vom ersten Teilnehmerendgerät an die Vermittlungsstelle zur Aktivierung/Deaktivierung des Leistungsmerkmals zu bewirken.

Auf einfache Weise wird so das Fernsteuern des ersten Teilnehmerendgeräts des ersten Teilnehmeranschlusses vom zweiten Teilnehmeranschluß aus ermöglicht. Die Aktivierung/Deaktivierung des Leistungsmerkmals kann mit Hilfe der üblichen Vermittlungsstellen und der nur um die Schaltungseinheiten erweiterten Teilnehmerendgeräte realisiert werden, die ansonsten in ihrem Aufbau im wesentlichen unverändert bleiben können.

Die Erfindung kann weiterhin dadurch ausgestaltet werden, daß die Schaltungseinheiten zum Nachrüsten des ersten und zweiten Teilnehmerendgeräts vorgesehen sind.

Damit können weiterhin bisher übliche Teilnehmerendgeräte verwendet werden. Die Schaltungseinheiten werden dazu beispielsweise akustisch mit den Teilnehmerendgeräten gekoppelt. Doch auch andere Kopplungsarten, wie die Kopplung auf elektrischem, akustischem oder optischem Wege sind möglich.

Daß nach der Aktivierung/Deaktivierung des Leistungsmerkmals eine Übertragung eines ersten Quittierungssignals von der Vermittlungsstelle zum ersten Teilnehmerendgerät und danach die Übertragung eines zweiten Quittierungssignals vom ersten Teilnehmerendgerät an das zweite Teilnehmerendgerät mit Hilfe der Schaltungseinheiten vorgesehen ist, ist eine weitere Ausgestaltungsmöglichkeit der Erfindung.

Auf einfache Weise wird so sichergestellt, daß ein Aktivieren/Deaktivieren des Leistungsmerkmals in der Vermittlungsstelle auf die Schaltungseinheit des zweiten Teilnehmerendgeräts rückwirkt, dort bestätigt wird und der das Leistungsmerkmal mit Hilfe des zweiten Teilnehmerendgeräts aktivierende oder deaktivierende Teilnehmer eine Rückmeldung erhalten kann.

Ein Ausführungsbeispiel der Erfindung wird nachstehend anhand der Zeichnung näher erläutert. Es zeigen:
- Fig. 1: ein Kommunikationssystem mit zwei angeschlossenen Teilnehmerendgeräten und
- Fig. 2: ein Schaubild zum Ablauf des Aktivierens eines Leistungsmerkmals

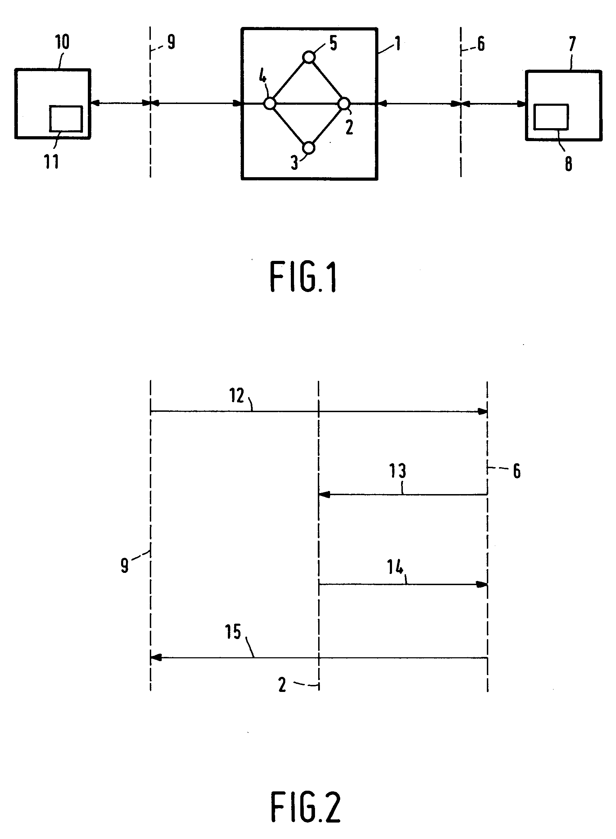

In Fig. 1 ist ein Kommunikationssystem mit einem Vermittlungsnetz 1 mit mehreren exemplarischen Vermittlungsstellen 2, 3, 4 und 5 dargestellt. In dem Kommunikationssystem ist über einen ersten Teilnehmeranschluß 6 ein erstes Teilnehmerendgerät 7 mit dem Vermittlungsnetz 1 gekoppelt. Das Teilnehmerendgerät 7 weist eine Schaltungseinheit 8 auf, die in das erste Teilnehmerendgerät 7 integriert wird oder als Modul zum Nachrüsten des ersten Teilnehmerendgeräts 7 ausgeführt ist. Über einen zweiten Teilnehmeranschluß 9 ist ein zweites Teilnehmerendgerät 10 mit dem Vermittlungsnetz 1 gekoppelt. Das Teilnehmerendgerät 10 weist eine andere Schaltungseinheit 11 auf, die entweder in das Teilnehmerendgerät 10 integriert wird oder als Modul zum Nachrüsten des zweiten Teilnehmerendgeräts 10 ausgeführt ist.

Ein in der Vermittlungsstelle 2 wirkendes Leistungsmerkmal wie beispielsweise die Rufumleitung für den Teilnehmeranschluß 6 kann aktiviert werden, so daß an den Teilnehmeranschluß 6 gerichtete Rufe umgeleitet werden. Die Aktivierung dieses Leistungsmerkmals ist allerdings für den ersten Teilnehmeranschluß 6 nur vom ersten Teilnehmeranschluß 6 selbst aus mit Hilfe des Teilnehmerendgeräts 7 möglich. Begibt sich der Inhaber des ersten Teilnehmeranschlusses 6 zum Ort des zweiten Teilnehmeranschlusses 9, so wird er vorher mit Hilfe des ersten Teilnehmerendgeräts 7 das Leistungsmerkmal Rufumleitung in der Vermittlungsstelle 2 aktivieren, so daß Rufe vom Teilnehmeranschluß 6 auf den Teilnehmeranschluß 9 umgeleitet werden.

Für den Fall, daß der Inhaber nun von dem Ort des Teilnehmeranschlusses 9 zum Ort eines nicht dargestellten dritten Teilnehmeranschlusses gehen will, ist es mit Hilfe der Erfindung möglich, das erste Teilnehmerendgerät 7 durch das zweite Teilnehmerendgerät 10 so fernzusteuern, daß das Leistungsmerkmal Rufumleitung für den Teilnehmeranschluß 6 auch vom zweiten Teilnehmeranschluß 9 aus mit Hilfe des zweiten Teilnehmerendgeräts 10 aktivierbar ist. Insbesondere bei öffentlichen Vermittlungsnetzen ist ein solches ferngesteuertes Aktivieren des Leistungsmerkmals Rufumleitung bisher nicht vorgesehen.

Im folgenden wird das ferngesteuerte Aktivieren des Leistungsmerkmals Rufumleitung unter Einbeziehung von Fig. 2 näher erläutert. Zunächst wird durch Anrufen des ersten Teilnehmeranschlusses 6 vom zweiten Teilnehmerendgerät 10 des zweiten Teilnehmeranschlusses 9 aus eine Verbindung zwischen den beiden Teilnehmeranschlüssen 9 und 6 über das Vermittlungsnetz 1 hergestellt. Dann wird mit Hilfe der Schaltungseinheit 11 ein erstes Signalisierungssignal 12 generiert und über den Teilnehmeranschluß 9, das Vermittlungsnetz 1 und den Teilnehmeranschluß 6 zum ersten Teilnehmerendgerät 7 übertragen, wo die Schaltungseinheit 8 dieses Signalisierungssignal 12 empfängt. Die Schaltungseinheit 8 wirkt nun als Umsetzvorrichtung so auf das Teilnehmerendgerät 7 ein, daß dieses ein aus dem ersten Signalisierungssignal abgeleitetes zweites Signalisierungssignal 13 generiert und an die Vermittlungsstelle 2 überträgt. Daraufhin wird in der Vermittlungsstelle 2 die Rufumleitung so aktiviert, daß an den ersten Teilnehmeranschluß 6 gerichtete Anrufe an den nicht dargestellten dritten Teilnehmeranschluß umgeleitet werden. Nach der Aktivierung der Rufumleitung sendet die Vermittlungsstelle 2 ein Quittierungssignal 14 an das erste Teilnehmerendgerät 7, woraufhin die Schaltungseinheit 8 ein zweites Quittierungssignal 15 generiert und zum zweiten Teilnehmeranschluß 9 bzw. zur Schaltungseinheit 11 des zweiten Teilnehmerendgeräts 10 sendet. Dem Inhaber des ersten Teilnehmeranschlusses am Ort des zweiten Teilnehmeranschlusses 9 wird daraufhin angezeigt, daß das Aktivieren der Rufumleitung erfolgt ist.

Ein Deaktivieren der Rufumleitung erfolgt völlig analog zum beschriebenen Aktivieren. Weiterhin ist auch eine Aktivierung oder Inaktivierung anderer Leistungsmerkmale wie beispielsweise dem Sperren mit Hilfe der beschriebenen Anordnung möglich. Das ebenfalls in der Vermittungsstelle wirkende Sperren ermöglicht es, daß Verbindungen von einem Teilnehmeranschluß aus zu bestimmten vorgebbaren anderen Teilnehmeranschlüssen nicht mehr hergestellt werden.

Die Signalisierungssignale 12 und 13 müssen als Signalisierunginformation so strukturiert sein, daß aus ihnen die Art des Leistungsmerkmals und die Rufnummer des dritten Teilnehmeranschlusses ableitbar ist. Außerdem muß erkennbar sein, ob das Leistungsmerkmal aktiviert oder inaktiviert werden soll. Die Übertragung von Signalisierungsinformation kann durch Verwendung unterschiedlicher Übertragungsfrequenzen wie beim Mehrfrequenzwahlverfahren oder in digitalen Netzen auch mit Hilfe von Protokollelementen realisiert werden.

Die Schaltungseinheiten 8 und 11 können einerseits in die Teilnehmerendgeräte integriert werden. Andererseits ist eine Ausführung der Schaltungseinheiten 8 und 11 als separate Module vorteilhaft, so daß die Teilnehmerendgeräte 7 und 10 auf einfache Weise und kostengünstig mit den Schaltungseinheiten 8 und 11 nachrüstbar sind. Die Schaltungseinheiten 8 und 11 werden dabei elektrisch, akustisch, optisch oder per Funk mit dem jeweiligen Teilnehmerendgerät gekoppelt.

## Patentansprüche

1. Kommunikationssystem mit einem ersten Teilnehmeranschluß (6) für ein erstes Teilnehmerendgerät (7), dem ein in einer Vermittlungsstelle (2) wirkendes Leistungsmerkmal zugeordnet ist, das vom ersten Teilnehmeranschluß (6) aus durch das erste Teilnehmerendgerät (7) aktivierbar und/oder deaktivierbar ist,
dadurch gekennzeichnet,
daß ein Fernsteuern des ersten Teilnehmerendgeräts (7) durch ein zweites Teilnehmerendgerät (10) eines zweiten Teilnehmeranschlusses (9) zur Aktivierung und/oder Deaktivierung des Leistungsmerkmals vorgesehen ist.

2. Kommunikationssystem nach einem der Ansprüche 1 oder 2,
dadurch gekennzeichnet,
daß eine Übertragung von Signalisierungsinformation (12) über das Vermittlungsnetz (1) von einer Schaltungseinheit (11) des zweiten Teilnehmerendgeräts (10) an eine Schaltungseinheit (8) des ersten Teilnehmerendgeräts (7) vorgesehen ist, um eine Übertragung von Signalisierungsinformation (13) vom ersten Teilnehmerendgerät (7) an die Vermittlungsstelle (2) zur Aktivierung/Deaktivierung des Leistungsmerkmals zu bewirken.

3. Kommunikationssystem nach Anspruch 2,
dadurch gekennzeichnet,
daß die Schaltungseinheiten (8, 11) zum Nachrüsten des ersten und zweiten Teilnehmerendgeräts (7, 10) vorgesehen sind.

4. Kommunikationssystem nach einem der Ansprüche 1 bis 3,
dadurch gekennzeichnet,
daß nach Aktivierung/Deaktivierung des Leistungsmerkmals eine Übertragung eines ersten Quittierungssignals (14) von der Vermittlungsstelle (2) zum ersten Teilnehmerendgerät (7) und danach die Übertragung eines zweiten Quittierungssignals (15) vom ersten Teilnehmerendgerät (7) an das zweite Teilnehmerendgerät (10) mit Hilfe der Schaltungseinheiten (8, 11) vorgesehen ist.

5. Schaltungseinheiten (8, 11) für ein erstes und zweites Teilnehmerendgerät (7, 10) eines ersten und zweiten Teilnehmeranschlusses (6, 9), wobei dem ersten Teilnehmeranschluß (6) ein in einer Vermittlungsstelle (2) wirkendes Leistungsmerkmal zugeordnet ist, das vom ersten Teilnehmeranschluß (6) aus aktivierbar und/oder deaktivierbar ist, und wobei ein Fernsteuern des ersten Teilnehmerendgeräts (7) durch ein zweites Teilnehmerendgerät (10) eines zweiten Teilnehmeranschlusses (9) mit Hilfe der Schaltungseinheiten (8, 11) zur Aktivierung und/oder Deaktivierung des Leistungsmerkmals vorgesehen ist.
